Europäisches Patentamt

(19) European Patent Office

Office européen des brevets

(11) Veröffentlichungsnummer: **0 040 426**
**B1**

(12) **EUROPÄISCHE PATENTSCHRIFT**

(45) Veröffentlichungstag der Patentschrift:
04.04.84

(21) Anmeldenummer: 81103836.3

(22) Anmeldetag: 19.05.81

(51) Int. Cl.³: **A 01 K 7/02**, A 01 K 39/026

(54) **Tränkeinrichtung.**

(30) Priorität: 19.05.80 DE 3019035

(43) Veröffentlichungstag der Anmeldung:
25.11.81 Patentblatt 81/47

(45) Bekanntmachung des Hinweises auf die Patenterteilung:
04.04.84 Patentblatt 84/14

(84) Benannte Vertragsstaaten:
AT FR GB NL

(56) Entgegenhaltungen:
DE - A - 2 719 954
GB - A - 238 725
NL - A - 7 714 460
US - A - 2 904 004

(73) Patentinhaber: Wildgruber, Georg, Moosburger
Strasse 70, D-8068 Pfaffenhofen (DE)

�){Erfinder: Wildgruber, Georg, Moosburger Strasse 70,
D-8068 Pfaffenhofen (DE)

(74) Vertreter: Reinhard, Horst, Dr. et al, Patentanwälte
Reinhard, Kreutz & Skuhra Leopoldstrasse 51,
D-8000 München 40 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Tränkeinrichtung

Die Erfindung betrifft eine Tränkeinrichtung gemäß dem Oberbegriff des Patentanspruchs 1. Eine solche aus der DE-A-2 719 954 bereits bekannte Tränkeinrichtung hat den Vorteil, daß die Tränkflüssigkeit (nachfolgend »Wasser«) in dem Vorratsbehälter gegenüber der Außenwelt, also dem Stallraum hermetisch abgeschlossen ist und somit verunreinigt werden kann, wobei aus dem Vorratsbehälter immer nur so viel Wasser in den Tränktrog fließt, wie von den Ferkeln jeweils getrunken wird. Das aus dem Vorratsbehälter durch das Auslaufrohr in den Tränktrog fließende Wasser muß nämlich durch ein entsprechendes Luftvolumen ersetzt werden, die Luft kann aber nur durch das Auslaufrohr hindurch in den Vorratsbehälter eindringen, dies ist aber wiederum nur dann möglich, wenn der Wasserspiegel in dem Tränktrog unterhalb des unteren Endes des Auslaufrohres abgesunken ist, so daß Luft eindringen kann. Entsprechend der eindringenden Luft tritt Wasser aus, der Wasserspiegel steigt über die Mündung des Auslaufrohres an und verschließt den weiteren Wasseraustritt. Es ist somit eine selbsttätige Regelung des Zuflusses in Abhängigkeit vom Verbrauch erreicht.

Ein gewisser Nachteil dieser Tränkeinrichtung kann darin erblickt werden, daß ein bestimmter Vorratsbehälter mit seinem Volumen immer nur an einen bestimmten Bedarf, d. h. an eine bestimmte Zahl und Größe von Verbrauchern (Ferkeln) optimal angepaßt sein kann. Dieser Verbrauch ändert sich aber naturgemäß mit der Anzahl der Ferkel oder auch bloß mit dem Wachstum der Ferkel. Man müßte dann in kürzeren Zeitabständen den Vorratsbehälter nachfüllen, was aber betrieblich/organisatorisch umständlich ist. Man hat daher bereits unterschiedlich große Vorratsbehälter vorgesehen, was aber ziemlich teuer ist, weil hierzu wiederum unterschiedliche Werkzeuge, insbesondere Spritzgußformen unterschiedlicher Größe erforderlich sind und von dem jeweiligen landwirtschaftlichen Betrieb zwei oder mehr Vorratsbehälter unterschiedlicher Größe angeschafft werden müssen. Auch ist bezüglich der Handhabung eine bestimmte Größe besser geeignet als beispielsweise ein Behälter von doppeltem Volumen.

Bei dieser Sachlage liegt der Erfindung die Aufgabe zugrunde, eine Tränkeinrichtung der eingangs genannten Art zu schaffen, bei welcher das Vorratsvolumen auf einfache Weise an den jeweiligen Bedarf angepaßt werden kann, ohne daß dazu unterschiedlich große Vorratsbehälter erforderlich sind. Die Lösung dieser Aufgabe ist in dem Kennzeichnungsteil des Hauptanspruchs angegeben. Statt mehrerer unterschiedlich großer Vorratsbehälter, von denen jeweils immer nur der eine Behälter mit der jeweils passenden Größe eingesetzt wird, wird gemäß der Erfindung einfach auf ein und denselben Vorratsbehälter, der ständig in Betrieb bleibt, ein weiterer Vorratsbehälter, nachfolgend Zusatzbehälter genannt, aufgesetzt und funktionsmäßig mit dem (untersten, ersten) Vorratsbehälter verbunden.

Und zwar wird der Zusatzbehälter so auf den Vorratsbehälter aufgesetzt, daß das Auslaufrohr des Zusatzbehälters statt des Stöpsels luftdicht in die Nachfüllöffnung des Vorratsbehälters eingesetzt wird und dabei zunächst in die Flüssigkeit in dem Vorratsbehälter eintaucht. Die physikalische Funktionsweise ist nun unverändert, da die Flüssigkeit aus dem kombinierten Behältervolumen wie geschildert jeweils dem Verbrauch entsprechend ausläuft.

Bei der bekannten Tränkeinrichtung gemäß der erwähnten DE-A-2 719 954 ist an dem Deckel eine im wesentlichen rohrförmige elektrische Heizeinrichtung vorgesehen, welche in die Tränkflüssigkeit eintaucht. Vorteilhaft wird bei einer solchen Tränkeinrichtung in weiterer Ausgestaltung vorliegender Erfindung nur an dem Verschlußdeckel des ersten (untersten) Vorratsbehälters eine solche Heizvorrichtung vorgesehen. An dem Zusatzbehälter bzw. jedem Zusatzbehälter kann man sich also die Heizvorrichtung sparen, da ja das Wasser aus dem Zusatzbehälter in den Vorratsbehälter fließt und somit durch dessen Heizvorrichtung automatisch angewärmt wird. Man benötigt daher auch entsprechend weniger Wärmeenergie. Von besonderem Vorteil ist auch noch zusätzlich, daß die Tränkflüssigkeit in dem Zusatzbehälter (bzw. den Zusatzbehältern) kühlgehalten und somit geschont wird, was insbesondere bei einem Zusatz von Vitaminen bzw. Präparaten wichtig ist. Denn damit die Tränkflüssigkeit in dem Tränktrog auf einer Temperatur von beispielsweise 30° C erhalten wird, muß das Wasser in dem Vorratsbehälter auf ca. 50 bis 60° C erwärmt werden, die erwähnten Zusätze können aber instabil werden oder an Wirkungsgrad einbüßen, wenn sie über lange Zeit diesen höheren Temperaturen ausgesetzt sind.

Eine weitere wichtige Ausgestaltung der Erfindung liegt noch darin, daß der Zusatzbehälter mit einem längeren Auslaufrohr für bzw. mit wenigstens einem Verlängerungsstück für sein Auslaufrohr versehen ist, so daß die Flüssigkeit aus dem Zusatzbehälter unmittelbar über dem Boden bzw. dem unteren Ende des Vorratsbehälters eingegeben wird. Auf diese Weise kann man den Zulauf aus dem Zusatzbehälter dosieren, wobei immer nur die jeweils aus dem Zusatzbehälter zulaufende Flüssigkeitsmenge mit der heißeren Flüssigkeit im Vorratsbehälter gemischt wird.

Mittels der erfindungsgemäßen Vorrichtung ist es auch gut möglich, den Tieren ein flüssiges Medikament zu verabreichen, wobei man das Medikament in den Zusatzbehälter eingibt, dessen Auslaufrohr hierbei unmittelbar über dem Boden des Vorratsbehälters ausmündet. Das Medikament, mit dem entsprechenden Wasservolumen versetzt, fließt dann zunächst durch das Auslaufrohr des Vorratsbehälters in den Trog und wird von den Ferkeln aufgenommen. Nachdem die relativ geringe Menge dieses Medikamentes aufgezehrt ist, läuft dann aus dem Vorratsbehälter klares Wasser nach, die Ferkel haben also den normalen Klarwasservorrat zur Verfügung.

Weitere vorteilhafte Ausgestaltungen sind in den abhängigen Ansprüchen angegeben, auf die zur Vermeidung von Wiederholungen verwiesen wird.

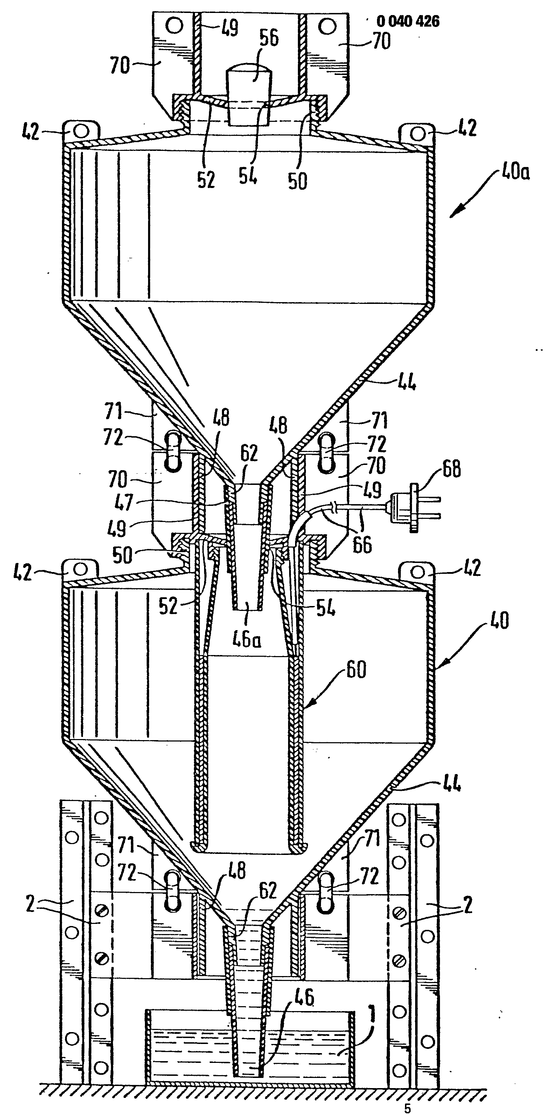

Nachfolgend wird ein Ausführungsbeispiel der Erfindung anhand der Zeichnung erläutert.

Die erfindungsgemäße Tränkeinrichtung besteht aus der Einrichtung nach DE-A-2 719 954 mit einem Tränktrog 1, über welchem mittels eines Ständers 2 ein Vorratsbehälter 40 derart angeordnet ist, daß ein Auslaufrohr 46 des Vorratsbehälters kurz über dem Boden des Tränktroges 1 endet.

Da der Deckel 52 und der Verschlußstopfen 56 luftdicht ausgebildet sind, kann nur durch das Auslaufrohr 46 Luft in den Behälter gelangen; solange aber das untere Ende des Auslaufrohrs 46 in die Flüssigkeit in dem Tränktrog 1 eintaucht, ist der Auslauf/Lufteintritt versperrt. Nur wenn die Ferkel so viel Wasser aus dem Tränktrog saufen, daß die Mündung des Auslaufrohrs 46 von dem Wasserspiegel freikommt, kann Luft eindringen und somit neue Flüssigkeit nachfließen, bis der Wasserspiegel in dem Tränktrog die Auslauföffnung wieder absperrt.

Gemäß der Erfindung ist ein weiterer Vorratsbehälter, sogenannter Zusatzbehälter 40a vorgesehen, der im wesentlichen gleich, insbesondere in der gleichen Größe wie der Vorratsbehälter 40 ausgebildet ist und auf den Vorratsbehälter 40 aufgesetzt bzw. aufsetzbar ist.

Dabei kommt es darauf an, daß das Innere des Zusatzbehälters 40a luftdicht mit dem Vorratsbehälter 40 verbunden ist. Und zwar ist das Auslaufrohr 46a luftdicht durch eine Nachfüllöffnung 54 des Vorratsbehälters 40 hindurchgeführt, so daß das Auslaufrohr 46a in die Flüssigkeit im Vorratsbehälter 40 eintaucht.

Auf der oberen Wandung des Vorratsbehälters 40 ist konzentrisch ein Gewindering 50 vorgesehen, auf welchem der Deckel 52 aufgeschraubt ist. Dabei greift der Gewindering 50 mit seinem oberen Ende in eine entsprechende Nut des Deckels 52. Die Schraubverbindung ist luftdicht. Im Zentrum des Deckels 52 ist die Nachfüllöffnung 54 vorgesehen, welche im Betrieb luftdicht verschlossen ist. Solange nur der Vorratsbehälter 40 wie bisher für sich allein verwendet wird, ist die Nachfüllöffnung 54 mittels eines Gummistöpsels 56 od. dgl. luftdicht verschlossen. An der Innenseite des Deckels 52 ist innen eine im wesentlichen rohrförmige elektrische Heizvorrichtung 60 vorgesehen, wobei zwischen zwei Rohren eine elektrische Heizfolie vorgesehen ist, deren Anschlußkabel 66 ebenfalls luftdicht durch den Deckel hindurchgeführt ist und mittels Stecker 68 an eine Stromquelle anschließbar ist. Stege 42 auf der Oberseite dienen zur Halterung.

Der Vorratsbehälter 40 weist einen kegelförgen unteren Abschnitt 44 auf, welcher konzentrisch von einem Stützring 48 umgeben ist. Das Auslaufrohr 46 ist dabei von einem unteren Rohrstutzen 62 des Behälters abnehmbar.

Gemäß der Erfindung ist (wenigstens) ein Zusatzbehälter 40a vorgesehen, welcher im wesentlichen ebenso ausgebildet ist wie der Vorratsbehälter 40 — mit dem Unterschied, daß der Zusatzbehälter 40a keine Heizvorrichtung aufweist. Wichtig ist dabei, daß der Zusatzbehälter 40a luftdicht mit dem Vorratsbehälter 40 verbunden ist. Und zwar ist — anstelle des Stöpsels 56 das Auslaufrohr des Zusatzbehälters 40a durch die Nachfüllöffnung 54 des Vorratsbehälters luftdicht hindurchgeführt, im Beispielsfall mittels einer Dichtungsmanschette 47. Das Auslaufrohr 46a taucht in die Flüssigkeit in dem Vorratsbehälter 40 ein. Für das Auslaufrohr 46a sind zweckmäßig ein oder mehrere Verlängerungsstücke vorgesehen, welche je nach Wahl auf das Auslaufrohr 46a aufsetzbar sind, womit also das Auslaufrohr insgesamt wahlweise verlängerbar ist und also die Flüssigkeit aus dem Zusatzbehälter eingegeben werden kann. Die Nachfüllöffnung 54 des Zusatzbehälters 40a ist nunmehr mittels eines Stöpsels 56 luftdicht verschlossen.

Auf dem Deckel 52 (bzw. auf jedem Deckel) ist ein Ring 49 vorgesehen, in den der Stützring 48 des Zusatzbehälters 40a eingesteckt ist, womit die beiden Behälter in axialer und radialer Richtung gegeneinander geführt sind. Ferner sind an dem Deckel 52 (bzw. an jedem Deckel) einander diametral gegenüberliegend zwei Stege 70 vorgesehen, welche mit Stegen oder Flügeln 71 zusammenarbeiten, die am kegeligen Teil 44 des Zusatzbehälters 40a angebracht sind. Die Stege 70 und Flügel 71 weisen Bohrungen auf, durch welche die Bolzen je einer Klammer bzw. eines Bügels einsteckbar sind. Die genaue Positionierung der Behälter 40, 40a gegeneinander und die gegenseitige Sicherung sind nämlich erforderlich, damit die Durchführung des Auslaufrohrs 46a durch die Öffnung 54 des Deckels 52 nicht undicht wird.

Außer für Ferkel kann eine erfindungsgemäße Tränkeinrichtung auch für andere Haustiere gebaut werden.

**Patentansprüche**

1. Tränkeinrichtung, insbesondere für Ferkel, mit einem Vorratsbehälter (40), in dessen oberer Wandung konzentrisch eine Reinigungs- bzw. Nachfüllöffnung (54) vorgesehen ist, die mittels eines Deckels bzw. Stopfens (56) luftdicht verschließbar ist, und an dessen unterem Ende ein Auslaufrohr (46) vorgesehen ist, das dicht über dem Boden eines Tränkgefäßes oder Tränktroges (1) ausmündet, dadurch gekennzeichnet, daß wenigstens ein weiterer Vorratsbehälter (Zusatzbehälter 40a) vorgesehen ist, der analog zu dem Vorratsbehälter (40), insbesondere in der gleichen Größe wie dieser, ausgebildet ist und dessen Auslaufrohr (46a) *luftdicht anstelle des* Verschlußstopfens (56) in die Nachfüllöffnung (54) des Vorratsbehälters einsetzbar ist.

2. Tränkeinrichtung nach Anspruch 1, dadurch gekennzeichnet, daß nur an dem Verschlußdeckel (52) des (ersten, untersten) Vorratsbehälters (40) eine Heizvorrichtung (60) vorgesehen ist.

3. Tränkeinrichtung nach Anspruch 1 oder 2, gekennzeichnet durch eine Dichtungsmanschette (47) am oberen Ende des Auslaufrohres (46a) des bzw. jedes Zusatzbehälters (40a), deren Außendurchmesser dem Durchmesser der Nachfüllöffnung (54) entspricht.

4. Tränkeinrichtung nach Anspruch 1, 2 oder 3, gekennzeichnet durch eine größere Länge des Auslaufrohres (46a) des bzw. jedes Zusatzbehälters (40a) bzw. durch wenigstens ein Verlängerungsstück für das Auslaufrohr (46a) des bzw. jedes Zusatzbehälters (40a).

5. Tränkeinrichtung nach wenigstens einem der vorhergehenden Ansprüche, dadurch gekennzeichnet, daß der bzw. jeder Zusatzbehälter (40a) in an sich bekannter Weise einen kegelförmigen, unteren Abschnitt (44) aufweist, der von einem Stützring (48) umgeben ist.

6. Tränkeinrichtung nach Anspruch 5, dadurch gekennzeichnet, daß an jedem Deckel (52) jeweils wenigstens ein hochstehendes Stützorgan (Stege 70, Ring 49) zum Stützen und Positionieren des Zusatzbehälters (40a) gegenüber dem Vorratsbehälter (40) vorgesehen sind.

## Claims

1. Watering device, in particular for piglings, consisting of a reservoir (40), having provided in its upper wall concentrically a cleaning or re-fill opening (54), which can be hermetically closed by means of a lid or plug (56), and having at its lower end an outlet pipe (46), which ends closely above the bottom of a watering vessel or watering trough (1), characterized in that at least one further reservoir (additional reservoir 40a) is being provided, which is formed analogously to the reservoir (40) and in particular having the same size as the reservoir, and the outhlet pipe (46a) of which, instead of a closing plug (56), is hermetically insertable in the re-fill opening (54) of the reservoir.

2. Watering device according to claim 1, characterized in that a heating device (60) in provided only at the lid (52) of the (first, lowest) reservoir (40).

3. Watering device according to claim 1 or 2, characterized in that a gasket (47) is provided at the upper end of the outlet pipe (45a) of the (respectively of each) additional reservoir (40a), the outer diameter of which corresponds to the diameter of the re-fill opening (54).

4. Watering device according to claim 1, 2 or 3, characterized in that the one respectively each additional reservoir (40a) is being provided with an outlet pipe (46a) of greater length or at least one extension pipe for the outlet pipe (46a) of the *one respectively of each additional reservoir* (40a).

5. Watering device according to at least one of the preceding claims, characterized in that the respectively each reservoir (40a) is provided with a cone-shaped, lower section (44) in a manner known per se, which is surrounded by a supporting ring (48).

6. Watering device according to claim 5, characterized in that each lid (52) is provided with at least one protruding supporting member (flanges 70, ring 49) for supporting and holding in position the additional reservoir (40a) with respect to the reservoir (40).

## Revendication

1. Dispositif d'abreuvoir, en particulier pour porcelets, comprenant un réservoir (40) dans la paroi supérieure duquel est prévu concentriquement une ouverture de nettoyage ou de remplissage (54), pouvant être fermée de façon étanche à l'air par un couvercle ou un bouchon (56), et à l'extrémité inférieure duquel est prévu un tube de sortie (46), qui débouche à proximité immédiate du fond d'un récipient ou d'une auge (1), caractérisé en ce qu'il est prévu au moins un autre réservoir (réservoir auxiliaire 40a), constitué de façon analogue au réservoir (40), et en particulier de même grandeur que ce dernier, et dont le tube de sortie (46a) peut être inséré de façon étanche à l'air dans l'ouverture de remplissage (54) du réservoir, à la place du bouchon (56).

2. Dispositif d'abreuvoir selon la revendication 1, caractérisé en ce qu'il est prévu un dispositif de chauffage (60) seulement sur le couvercle de fermeture (52) du premier réservoir ou réservoir inférieur (40).

3. Dispositif d'abreuvoir selon la revendication 1 ou 2, caractérisé par une manchette d'étanchéité (47) prévue à l'extrémité supérieure du tube de sortie (46a) du ou de chaque réservoir auxiliaire (40a), dont le diamètre extérieur correspond au diamètre de l'ouverture de remplissage (54).

4. Dispositif d'abreuvoir selon l'une des revendications 1 à 3, caractérisé par une longueur plus du tube de sortie (46a) du ou de chaque réservoir auxiliaire (40a) ou par au moins un élément de prolongement du tube de sortie (46a) du ou de chaque réservoir auxiliaire (40a).

5. Dispositif d'abreuvoir selon l'une des revendications précédentes, caractérisé en ce que le ou chaque réservoir auxiliaire (40a) présente, de manière connue, une section inférieure (44) de forme conique, entourée par un anneau d'appui (48).

6. Dispositif d'abreuvoir selon la revendication 5, caractérisé en ce que sont prévus sur chaque couvercle (52) au moins un organe d'appui vertical (ailettes 70, anneaux 49) destiné au soutien et au positionnement du réservoir auxiliaire (40a) par rapport au réservoir principal (40).